(19) Europäisches Patentamt
European Patent Office
Office européen des brevets

(11) Publication number: **0 070 174**
**B1**

(12) **EUROPEAN PATENT SPECIFICATION**

(45) Date of publication of patent specification: **09.10.85**

(51) Int. Cl.$^4$: **H 04 N 9/76**

(21) Application number: **82303628.0**

(22) Date of filing: **09.07.82**

(54) **Digital chroma-key apparatus.**

(30) Priority: **09.07.81 JP 107420/81**
**09.07.81 JP 107421/81**

(43) Date of publication of application:
**19.01.83 Bulletin 83/03**

(45) Publication of the grant of the patent:
**09.10.85 Bulletin 85/41**

(84) Designated Contracting States:
**DE FR GB NL**

(56) References cited:

**INTERNATIONAL BROADCAST ENGINEER, vol. 11, no. 173, September 1980, pages 34-36, Eton (GB); "Chromakey systems from...."**
**INTERNATIONAL BROADCAST ENGINEER, vol. 11, no. 173, September 1980, pages 26-28, Eton (GB); D. BRYAN et al.: "A collection of chromakeyers"**
**FKTG, Tagungsband der 8. Jahrestagung October 6.9, 1980 in Berlin, pages 158-165 and 176-187**

(73) Proprietor: **SONY CORPORATION**
**7-35 Kitashinagawa 6-Chome Shinagawa-ku**
**Tokyo 141 (JP)**

(72) Inventor: **Yamamoto, Kaichi**
**1-5599-39, Hibarigaoka**
**Zama-shi Kanagawa-ken (JP)**

(74) Representative: **Ayers, Martyn Lewis Stanley et al**
**J.A. KEMP & CO. 14 South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 070 174 B1

## Description

The invention relates generally to a digital chroma-key apparatus. More particularly, although not exclusively, this invention relates to a digital chroma-key apparatus in which a keying signal can be adjusted to compensate the boundary between foreground scene and background scene to be inserted.

There is a problem with prior digital chroma-key apparatuses in that the keying signal does not always correspond with the desired boundary between the background and the object being keyed onto it.

It has been proposed in connection with analogue chroma-key systems to adjust the keying signal so that the location of the chroma-key boundary can be varied.

In the article in the journal FKTG, Tagungsband der 8. Jahrestagung from October 6—9, 1980 in Berlin, pages 158—165 and 176—187, there is disclosed a digital chroma-key apparatus comprising means for generating a keying signal in response to specified chroma information of a first digital video signal and means for mixing said first digital signal with a second video signal in accordance with the digital keying signal. A difficulty arises with such systems where it is desired, in the analog case, to shift the chroma-key boundary. Because of the manner in which the key signal is generated digitally, the level of the key signal changes step by step in increments corresponding to the clock interval of the digital video signal. It has not been possible to shift the chroma-key boundary by less than the distance corresponding to one clock interval and an object of the present invention is to provide a system which can achieve this.

According to the present invention, there is provided a digital chroma-key apparatus comprising means for generating a keying signal in response to specified chroma information of a first digital video signal, and means for mixing said first digital video signal with a second digital video signal in accordance with said digital keying signal, characterised by means for detecting the leading and trailing edges of said digital key signal, means for shifting said digital keying signal in increments of a clock interval of the digital video signal data so as to expand or compress the leading and/or trailing edges of said digital keying signal, and level control means for amplifying or attenuating levels of the leading and trailing edges in response to commands of expansion or compression, respectively.

As will become apparent from the following description, the illustrated embodiment of the invention can provide an improved digital chroma-key apparatus which can obviate the above problems.

The illustrated embodiment provides a digital chroma-key apparatus which is capable of adjusting the timing of the leading and trailing edges of the digital key signal; in particular the timings may be adjusted over a range corresponding to an integral multiple of a sampling frequency of the digital keying signal, and also in a range narrower than one period of the sampling period.

The above and other features and advantages of the invention will become apparent from the following description taken in conjunction with the accompanying drawings through which the like references designate the same elements and parts. In the drawings:—

Fig. 1 is a block diagram schematically showing a known chroma-key apparatus;

Figs. 2A through 2F are schematic diagrams used to explain the operation of the apparatus of Figure 1;

Fig. 3 is a block diagram schematically showing the overall construction of a digital chroma-key apparatus according to one embodiment of the invention;

Fig. 4 is a graph used to explain how a keying signal is generated in the apparatus of Figure 3;

Fig. 5 is a block diagram schematically showing an arrangement of a keying processor;

Figs. 6A through 6D and Figs. 7A through 7D are respectively waveform diagrams used to explain the keying processor of Figure 5;

Fig. 8 is a block diagram schematically showing the outline construction of a color canceller and a mixer;

Fig. 9 is a block diagram showing one form of edge timing adjusting circuit for use in the invention;

Figs. 10A to 10F, Figs. 11A to 11F and Figs. 12A to 12G are timing charts, each used to explain the operation of the edge timing adjusting circuit; and

Fig. 13 and Figs. 14A and 14B are, respectively, a block diagram schematically showing a further form of fine adjusting circuit included in the edge timing adjusting circuit and waveform diagrams used to explain the same.

A known digitial video signal processing apparatus such as a digital chroma-key apparatus and a digital montage apparatus has to form a keying signal corresponding to one or more areas in one picture. The reason for this is as follows. The known chroma-key apparatus is of the construction as shown in Fig. 1. In the Figure, references 1 and 2 denote color television cameras, which are used to take pictures of foreground and background, respectively. References 3 and 4 denote gate circuits to which the foreground and background color video signals are respectively supplied. Reference 5 denotes a keying signal generator to generate the keying signal from the output of camera 1 and to supply the key signal to the gate circuits 3 and 4. Reference 6 denotes a mixer to mix the outputs of the gate circuits 3 and 4 and produce the mixed output at an output terminal 7.

By way of example, as shown in Fig. 2A, a foreground 10 in which an object 9 (for example, human figure) is positioned in front of a back screen 8 painted with a chroma-key color, for example, blue, is photographed or picked up by the color television camera 1 and the key signal generator 5 calculates three primary color components R, G and B in the above foreground color video signal so as to convert the color phase difference to an amplitude difference thus forming the key signal. Figure 2C shows, unshaded, the area for which the gate 3 is opened by the keying signal so that the image of object 9 is passed to the mixer, while Figure 2 shows the area for which the gate 4 is opened. Thus at the output terminal 7 there is generated a picture signal in which the object 9 is inserted into the background 11 as shown in Fig. 2F.

As mentioned above, the edge portions of the keying signal thus produced do not always correspond to the boundary or border between the back screen 8 and the object 9.

Embodiments of the invention will hereinafter be described by way of example with reference to Figures 3 to 14B of the drawings, in which a digital key signal adjusting apparatus of the invention is applied to a digital chroma-key apparatus intended for a digital video signal of Y, U and V signal format.

Fig. 3 is a block diagram showing the overall arrangement of a digital chroma-key apparatus embodying the invention. In the figure, reference 12 denotes an interface to which a foreground color video data FG. VID and a background color video data BG. VID each being together with a timing reference signal TRS are supplied. The above color video data FG. VID and BG. VID are formed of respective components provided by sampling a luminance signal Y and color difference signals U and V, each of which is formed by matrix calculation of output signals R, G and B from a color television camera, using a sampling frequency ratio of, for instance, 14:7:7. The interface 12 takes the timing signals (horizontal sync. signal, vertical sync. signal and the like) decoded from the respective timing reference signals TRS into consideration, then makes the phases of two color video data FG. VID and BG. VID appropriate, and then delivers the same to the next stage.

Reference 13 denotes a back color data generator which derives back color data from the foreground color video data FG. VID and supplies the same to a keying signal generator 14 and a color canceller 16.

The keying signal generator 14 compares the back color data with the foreground color video data FG. VID at every corresponding sample thereto to allow the generation of a keying signal with a predetermined level. Since the key signal per se thus developed has so much external disturbance, it cannot be utilized as it is or immediately. Therefore, as will be discussed later, the key signal is supplied to a key processor 15, whereby it is subjected to waveform shaping processes such as clipping, adjustment of edge timings of this clipped output, adjustment of gain and the like. Thus the key processor 15 produces a key signal KEY.

The color canceller 16 eliminates the back color from the foreground color video data FG. VID on the basis of the above key signal KEY. For instance, when the object 9 (Figs. 2A to 2F) is transparent, the transparent back color is removed. More specifically, the back color data is amplitude-modulated by the key signal KEY so as to subtract the modulated output from the foreground color video data FG. VID. The elimination of the back color takes place only on the color difference signals U and V, while the luminance signal Y is merely passed through the color canceller 16.

The color canceller 16 is supplied with the foreground color video data FG. VID by way of a delay circuit 17. The delay circuit 17 has a delay time corresponding to the time needed by the key processor 15 in its waveform shaping processes mentioned before.

An output CAN. VID of the color canceller 16 and the background color video data BG. VID are supplied to a mixer 18, in which they are mixed with each other on the basis of the key signal KEY applied thereto. Apart from simply switching between the two color video data signals CAN. VID and BG. VID, the mixing can be a so-called cross fade in which at the boundary, the level of one data is gradually decreased, while the level of the other data is gradually increased. The output of the mixer 18 is supplied through a digital filter 19 to an interface 20. The digital filter 19 serves to shape the waveform of the output derived from the mixer 18.

The interface 20 permits the color video data CAN. VID, the colors of which are removed and derived from the color canceller 16, the mixed color video data KYD. VID from the digital filter 19, the respective timing reference signals TRS and the key signal KEY to be developed and passed to further equipment.

In addition, a microprocessor 21, a CRT (cathode ray tube) monitor 22 and a console 23 are provided, in which translation of a user key input from the console 23, transfer of the above translation into the inside of the system, calculation processing required by respective circuit blocks and the like are possible.

The aforesaid digital chroma-key apparatus operates using a sampling clock with a frequency corresponding to the sampling rate of the color difference data.

The data input to the keying signal generator 14 may be processed in a number of ways. For example, as illustrated in Fig. 4, reference points $U_0$ and $V_0$ corresponding to the back color are plotted on an u—v chromaticity map, and a primary coupling ($K=|X|+|Y|$) of projection components x and y of momentary values U and V of the foreground color video data FG. VID relative to a new coordinate prepared based upon the above reference points $U_0$ and $V_0$ is calculated so as to generate the keying signal, where

$$x=(U-U_0)\cos\theta+(V-V_0)\sin\theta$$

$$y=(V-V_0)\cos\theta-(U-U_0)\sin\theta$$

Fig. 5 schematically shows the arrangement of the key processor 15, in which a keying signal K from the key signal generator 14 is supplied to clippers 24 and 25. The clipper 24 generates a keying signal HKEY for hard keying, while the clipper 25 generates a keying signal SKEY for soft keying. The keying signal HKEY is supplied to a non-additive mixer 27 and a selector 28, while the other keying signal SKEY is supplied through a phase shifter 26 to the non-additive mixer 27 and the selector 28 likewise. The non-additive mixer 27 compares the values of the two keying signals HKEY and SKEY and permits either of the larger ones to be produced therefrom.

The keying signal derived from the selector 28 is supplied to an edge timing adjusting circuit or adjuster 29 in which the timing at the edge, namely the portion having the slope is adjusted. This edge timing adjuster 29 is of a construction capable of adjustment taking a sampling period *t* of a clock shown in Fig. 6A as a unit and adjusting during this Sampling period *t*. The edge timing adjuster 29 has the following modes of adjustment. A shift mode for shifting the key signal in parallel with the unit of the clock period *t* as shown in Fig. 6B; a coarse adjustment mode for contracting the edge to the inside or expanding the same to the outside with increments of a unit of the clock period *t* as shown in Fig. 6C; and a fine adjustment mode for contracting the edge by amounts corresponding to less than the clock period *t* as shown in Fig. 6D. Further details of this edge timing adjuster 29 will be described later.

The keying signal derived from the edge timing adjuster 29 is developed as the keying signal KEY at the output thereof via a filter 30. The filter 30 allows the influence of quantizing errors in the keying signal processing up to the preceding stage to be reduced, and restricts the band width of the keying signal KEY in such manner than no aliasing noise will occur when the video signal is modulated by the keying signal KEY in the mixer 18.

For the control and calculation processing of the key processor 15 as described above, data, addresses and control signals, each being passed through an I/O controller 31, are supplied to the respective circuits in the key processor 15.

Hard and soft keying operations will be described briefly with reference to Figs. 7A through 7D. In a foreground 10 where an object 9 of, for example, transparent glass, is put in front of the back screen 8, the back color is seen through the center of the glass so that as shown in Fig. 7A, a signal K, whose level is increased in association with the outline of the object 9 and reduced at the center of the glass, is derived from the key signal generator 14. Although Figs. 7A through 7D represent conveniently the keying signal as an analog waveform for the sake of explanation, the keying signal is digital data since in the aforesaid digital chroma-key apparatus in fact deals with the data in which one sample of 8 bits occurs sequentially at each sampling period *t*. The clipper 24 executes the clipping operation which takes base clipping level BL and peak clipping level PLh as threshold levels so as to generate the hard keying signal HKEY as shown in Fig. 7B. The clipper 25 executes a clipping operation which takes base clipping level BL and peak clipping level PLs (peak clipping level PLs is greater than the peak clipping level PLh) as threshold levels thus generating the soft keying signal SKEY as shown in Fig. 7C.

In case of a transparent object 9, the soft keying operation is capable of generating a keying signal corresponding satisfactorily to the back color as seen through the object and to light from the back screen 8 reflected by the object 9.

Fig. 8 illustrates in block form the principle of the color cancellation and mixing operations done using the keying signal KEY. Initially, let us assume that the range of the level of the keying signal KEY from its minimum value to the maximum value is *I* and the relative level of the momentary value thereof is *k*. Then the keying signal KEY is converted to (I–k) when it is supplied to a calculation circuit 32. Taking the keying signal SKEY shown in Fig. 7C as an example, the keying signal SKEY is converted to a keying signal SKEY' shown in Fig. 7D. This keying signal SKEY' is supplied to a multiplier 33 so as to modulate the back color signal $D_B$ derived from the back color data generator 13 (Fig. 3). The output of the multiplier 33 is supplied to a subtractor 34 thereby subtracted from the foreground color video data FG. VID. Thus the subtractor 34 derives the video data CAN. VID which is such one that from the color video data FG. VID removed are the data which corresponds with the object 9 and the back color of the object 9. The aforesaid operations are all performed by the color canceller 16 in Fig. 3.

Moreover, in the multiplier 35 the video data CAN. VID is modulated by the keying signal SKEY and in the multiplier 36 the background video data BG. VID is modulated by the keying signal SKEY'. Then, the outputs of both the multipliers 35 and 36 are added to each other by an adder 37. The output video data KYD. VID of the adder 37 affects the picture such that the background picture becomes transparent when the object 9 is transparent described previously. Owing to the slope of the edge of the keying signal KEY, at the boundary between the object 9 and the background 11, a cross-fade is performed to incur the gradual switchings of the pictures from one to another thus rendering the boundary of the pictures quite natural.

The edge timing adjuster 29 included in the key processor 15 will be described in detail with reference to Fig. 9.

The edge timing adjuster 29 includes a shift and coarse adjusting circuit 38 supplied with the digital keying signal KEY of 8 bits per sample from the selector 28 (Fig. 5) and a fine adjusting circuit 39 provided at the next stage thereof shown by a block in broken lines. In this case, control logic circuit 40 is common to both of the above circuits 38 and 39. The control logic circuit 40 is supplied with data and control signals from the microprocessor 21 (Fig. 3) through the I/O control circuit 31, whereby the amount of shift, coarse adjustment ON/OFF, fine adjustment ON/OFF, switching of development or contraction, the amount of adjustment and so on are controlled.

First of all, the shift and coarse adjusting circuit 38 will be described, which includes three RAMs (random access memories) 42, 43 and 44. Since in this example, the shift or adjustment by at most 4-clock periods is possible, each of the RAMs 42, 43 and 44 has the capacity of 4 samples. The RAM 42 is for the shifting mode, the RAM 43 is for the coarse adjustment of the leading edge and the RAM 44 is for the coarse adjustment of the trailing edge. The write operations of the RAMs 42, 43 and 44 are controlled in common by a write address WA generated from the control logic circuit 40.

Also, the RAM 42 is supplied with a read address $RA_0$ generated from the control logic circuit 40. The write and read operations of each of the RAMs 42, 43 and 44 are possible during one memory cycle. Addressing of the RAM 42 is so controlled so that the difference between the write address WA and the read address $RA_0$ produces an output in which the input keying signal KEY is shifted by one to four clock periods.

The RAMs 43 and 44 are respectively supplied with read addresses $RA_1$ and $RA_2$, each being generated from the control logic circuit 40. Then, controlling the read addresses $RA_1$ and $RA_2$ so as to make the delay times of the RAMs as has been predetermined, one specifies the amount of the expansion or contraction.

The output of the RAM 42 is supplied to the RAM 43 via a latch 45 and is also supplied to the RAM 44 via latches 46, 47 and 48. Each of the latches shown in Fig. 9 produces a delay time of one sampling clock period. Consequently, the data written in the RAM 43 is advanced in phase compared with the output MID of the latch 48. The output of this RAM 43 is supplied through latches 49 and 50 to a latch 56 in the fine adjusting circuit 39. Also, the output of the RAM 44 is supplied through latches 51 and 52 to the latch 56 in the fine adjusting circuit 39. In this case, control signals $TK_1$, $TK_2$ and HLD derived from the control logic circuit 40 are respectively supplied to the latches 50, 52 and 56, by which, in view of the movement of the waveform of the key signal, one of the outputs of either the latch 50 or the latch 52 is selected and the data renewal of the latch 56 is stopped.

The leading and trailing edges indicating the movement of the waveform are detectable by comparing an output PRE of the latch 49 with an output PRE', which is provided by delaying the output PRE by one clock period through latch 53, in a level comparator 54. In other words, the level comparator 54 produces a detecting signal CT which becomes "H" when the levels of both outputs are equal and stays in the flat regions, a detecting signal UP which becomes "H" at the rising slope (PRE>PRE') that is, the leading edge, and a detecting signal DW which becomes "H" at the falling slope (PRE<PRE'), that is, the trailing edge and these detecting signals are then supplied to the control logic circuit 40. In the above level comparison, it is more practical to use the upper 6 bits of the output PRE of the latch 49 so as to widen the range for judging the flat region. These detecting signals CT, UP and DW are synchronized with the output PRE of the latch 49. Moreover, a level comparator 55 is provided to compare in level the output PRE of the latch 49 and an output FLW of the latch 51, whereby a detecting signal GT is generated by the level comparator 55. This detecting signal GT is employed so as to avoid unnatural waveforms of the edge portions caused by the expansion or contraction upon coarse adjustment. This level comparator 55 is supplied with a mode switching signal through the I/O controller 31, whereby level comparator 55 generates a detecting signal GT. Signal GT is "H" when the output FLW is greater than or equal to the output PRE (FLW≧PRE) in the expansion mode and is "H" when the output FLW is greater than the output PRE (FLW>PRE) in the contraction mode.

In the shift and coarse adjusting circuit 38, when the coarse adjustment is OFF, the control signal $TK_1$ is set to "L" and the control signal $TK_2$ is set to "H" by the instruction from the microprocessor 21 (Fig. 3) so that the key signal read out from the RAM 44 is always supplied through the latches 51 and 52 to the latch 56. Thus by the control of the read address $RA_0$ for the write address WA in the RAM 42, it is possible to shift (delay) the key signal KEY by an integral multiple of the period of the sampling clock.

Also, in the ON state of the coarse adjustment facility, the microprocessor 21 (Fig. 3) issues the expansion or contraction command and specifies the amount thereof, and these instructions or commands are supplied to the control logic circuit 40 and the operation mode of the level comparator 55 is switched. To be more precise, the control logic circuit 40 generates the control signals $TK_1$, $TK_2$ and HLD on the basis of the logical expressions as follows.

In expansion:

$$TK_1 = UP \cdot \overline{GT}$$

$$TK_2 = DWM \cdot GT$$

$$HLD = \overline{TK_1 + TK_2}$$

In contraction:

$$TK_1 = DW \cdot GT$$

$$TK_2 = UPM \cdot \overline{GT}$$

$$HLD = \overline{TK_1 + TK_2}$$

where DWM and UPM represent respectively the detecting signals DW and UP delayed by the phase differences of the outputs PRE and FLW. The control amounts for expansion and the contraction are determined by how much phase difference the outputs PRE and FLW of the latches 49 and 51, specified by the read addresses $RA_1$ and $RA_2$ supplied from the control logic circuit 40, have relative to the output MID of the latch 48. In expansion, the leading edge of the output PRE and the trailing edge of the output FLW are selected by the control signals $TK_1$ and $TK_2$, while in contraction, the leading edge of the output FLW and the trailing edge of the output PRE are selected b'y the control signals $TK_1$ and $TK_2$. Therefore, controlling the phase differences of the outputs PRE and FLW against the output MID can make it possible to control the amount of expansion or contraction of the leading and trailing edges independently.

By way of example, a description will be given of the expansion operation in which for the sampling clock shown in Fig. 10A, the output PRE of the latch 49, the output PRE' of the latch 53, the output MID of the latch 48 and the output FLW of the latch 51 are respectively given as shown in Fig. 10B (the waveforms in the figure indicate discrete ones formed of sampled data in analog fashion). As will be apparent from the waveforms of Fig. 10B, in the expansion operation of Fig. 10, the respective RAMs 43 and 44 are so controlled that the outputs PRE and FLW may have phase differences advanced and delayed by one clock period for the output MID, respectively, thus resulting in expansions of one clock period. In this case, the phase difference between the outputs PRE and FLW is two-clock periods.

The level comparator 54 level-compares the outputs PRE and PRE' with each other so as to generate the detecting signals CT, UP and DW shown in Fig. 10D, respectively. Also, in expansion, the level comparator 55 produces the detecting signal GT which goes to "H" when the output FLW is greater than or equal to the output PRE (FLW≧PRE) as shown in Fig. 10E. These detecting signals CT, UP, DW and GT are all supplied to the control logic circuit 40, which, based upon the aforementioned logical expressions, forms the control signals $TK_2$, $TK_1$, HLD as shown in Fig. 10F. In the "H" interval of each of the control signals $TK_2$ and $TK_1$, including its rising edge, the sampled data contained in the respective waveforms of the outputs FLW and PRE are selected by the latches 52 and 50, while in the "H" interval of the control signal HLD, including its rising edge, the previously sampled data are held.

The sampled data selected and held by the control signals $TK_2$, $TK_1$ and HLD shown in Fig. 10F become those shown by white circles in Figs. 10B and 10C and hence a keying signal EAK, both of the leading and trailing edges of which are expanded by one clock period for the output MID as shown in Fig. 10C, is derived therefrom.

Figs. 11A through 11F are timing charts each showing the operation to form a keying signal EAK whose leading and trailing edges are both contracted by one clock period. The sampling clock CK in Fig. 11A, waveforms of the outputs PRE, PRE', MID and FLW in Fig. 11B and detecting signals CT, UP and DW in Fig. 11D are the same as those of the previously described expansion operation in Figs. 10A, 10B and 10D. However, since the level comparator 55 is switched so as to derive a detecting signal GT (Fig. 11E) which goes to "H" when the output FLW is greater than the output PRE (FLW>PRE) and the logical expressions of the control logic circuit 40 are different, control signals $TK_2$, $TK_1$ and HLD are formed as illustrated in Fig. 11F. Accordingly, the sampled data denoted by white circles in Figs. 11B and 11C are selected and held, and hence a keying signal EAK whose leading and trailing edges are both contracted by one clock period as shown in Fig. 11C can be formed.

Returning to Fig. 9, the fine adjusting circuit or adjuster 39 will be described next. The keying signal developed at the output of the latch 56 is supplied to a buffer memory 57 and RAMS 58 and 59, from which these outputs are derived through a latch 60 to the output. The buffer memory 57 and the RAMs 58 and 59 are respectively supplied with control signals NC, ALE and ATE as their output control signals, each being generated from the control logic circuit 40, from which outputs appear during the period at which each of the control signals NC, ALE and ATE is "H". The RAM 58 is the table for use in conversion of the leading edge onto which is loaded the conversion data supplied from the microprocessor 21 (Fig. 3) through the I/O controller 31. The RAM 59 is the table for use in conversion of the trailing edge onto which the conversion data from the microprocessor 21 (Fig. 3) is likewise loaded. This embodiment of the invention performs the contraction as a fine adjustment, so that the conversion data is of a value provided by attenuating each data sample of the keying signal by a predetermined amount supplied from the latch 56.

Initially, when the fine adjustment is inactive, in the control logic circuit 40, the control signal ALE is "L", the control signal ATE is "L" and the control signal NC is "H", so that the output always appears from the buffer memory 57, which is then derived as the output by way of the latch 60.

When the fine adjustment is active, the logical expressions to form the control signals are different depending on whether the coarse adjustment operation of the shift and coarse adjustment circuit 38 at the previous stage is ON or OFF. Consequently, respective control signals are generated based upon the following logical expressions as stated below.

When the coarse adjustment is OFF,

$$ALE=UPD$$

$$ATE=DW.CTD+DWD.\overline{CT}$$

When the coarse adjustment is ON and the expansion operation mode is active

$$ALE=TK_1\ D$$

$$ATE=TK_2$$

$$NC=\overline{ALE+ATE}$$

When the coarse adjustment is OFF and the construction operation mode is active

$$ALE = TK_2\,D$$

$$ATE = TK_1$$

$$NC = \overline{ALE + ATE}$$

In the above expressions, the respective detecting signals UPD, CTD and DWD represent the detecting signals UP, CT and DW delayed by two clock periods and the respective control signals $TK_1$ D and $TK_2$ D represent the control signals $TK_1$ and $TK_2$ in coarse adjustment delayed by one clock period.

The fine adjustment operation when the coarse adjustment is OFF will be described with reference to the timing charts of Figs. 12A through 12G. Fig. 12A shows a sampling clock CK and Fig. 12B shows the key signal PRE appearing at the output of the latch 49. At a timing synchronized with that of the keying signal PRE, the detecting signals CT, UP and DW shown in Fig. 12D are derived from the level comparator 54. The detecting signals CTD, UPD and DWD, that is, the detecting signals CT, UP and DW each delayed by two clock periods, are shown in Fig. 12E. The buffer memory 57, and the RAMs 58 and 59 are respectively supplied with a keying signal that is the keying signal PRE delayed by the latches 50 and 56 as shown in Fig. 12C. Although in practice the keying signals respectively shown in Figs. 12B, 12C and 12G are formed of the respective successive samples, in order to facilitate understanding, each of them is indicated as an analog signal. Of the waveforms shown by a broken line in Fig. 12C, the waveform corresponding to the leading edge represents the conversion data derived from the RAM 58 and the waveform corresponding to the trailing edge represents the conversion data derived from the RAM 59.

When the coarse adjustment is OFF, the control signals ALE, ATE and NC shown in Fig. 12F are formed on the basis of the foregoing logical expressions. With these control signals ALE, ATE and NC, the sampled data shown by white circles in Fig. 12C are derived from any one of the buffer memory 57 and the RAMs 58 and 59, so that as shown in Fig. 12G, a keying signal is formed whose leading and trailing edges are respectively contracted during one sampling period.

Further, by loading such data as to increase the original data (maximum value is 255 by 8 bits) as the conversion data onto the respective RAMs 58 and 59, the leading and trailing edges can be expandable during one clock period.

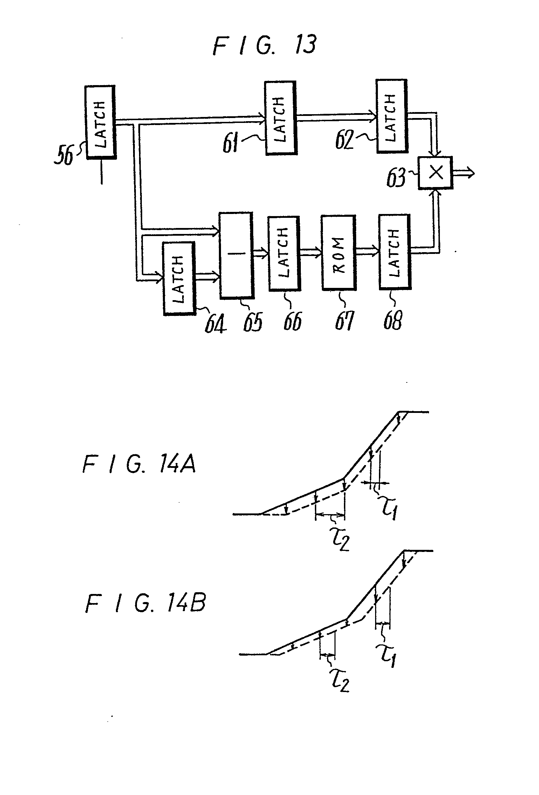

Fig. 13 is a block diagram showing another embodiment of the fine adjusting circuit for adjuster 39, in which a coefficient corresponding to the slope of the edge of the input key signal is generated by a ROM (read-only memory) 67 and this coefficient is multiplied with the respective sample of the key signal by a multiplier 63. This multiplier 63 is supplied with the key signal by way of latches 61 and 62. The slope of the edge of the key signal is detected by a latch 64 and a substractor 65, and the detected signal is then supplied through a latch 66 to the ROM 67 as the address thereof. The coefficient derived from this ROM 67 is supplied to the multiplier 63 via a latch 68. The positive and/or negative slope of the edge is indicated by the most significant bit of the detected signal.

Since the fine adjusting circuit 39 of a construction shown in Fig. 9 previously described attenuates the sampled data indiscriminately by a predetermined level irrespective of whether the slope of the edge is steep or gentle, the contracted amount $\tau_1$ where the slope is steep differs from a contracted amount $\tau_2$ where the slope is gentle so that the contracted amount $\tau_2$ is greater than the contracted amount $\tau_1$ ($\tau_2 > \tau_1$) thus causing the contracted amounts to be scattered widely. On the other hand, with the embodiment of the fine adjusting circuit 39 shown in Fig. 13, the slopes are detected and a multiplication coefficient is generated which becomes larger if the slopes are made steeper from the ROM 67, so that as shown in Fig. 14B, the contracted amount can be made constant ($\tau_1 = \tau_2$) regardless of the steepness and/or gentleness of the slope.

As will be understood from the description of the aforesaid embodiments, in accordance with the invention, like the digital key signal in the chroma-key apparatus, the adjustment for expanding or contracting the timings of the edge portions corresponding to a part of the outline region of the picture by an integral multiple of the sampling period is possible.

In addition, in accordance with this invention, it is possible to independently adjust the expanding or contracting amount of the leading and trailing edges of the key signal.

**Claims**

1. A digital chroma-key apparatus comprising means (14) for generating a keying signal in response to specified chroma information of a first digital video signal (FG.VID), and means (18) for mixing said first digital video signal with a second digital video signal (BG.VID) in accordance with said digital keying signal, characterised by means (53, 54) for detecting the leading and trailing edges of said digital key signal, means (38) for shifting said digital keying signal in increments of a clock interval of the digital video signal data so as to expand or compress the leading and/or trailing edges of said digital keying signal, and level control means (39); (Figure 13) for amplifying or attenuating levels of the leading and trailing edges in response to commands of expansion or compression, respectively.

2. A digital chroma-key apparatus according to claim 1, in which said control means (39) comprises a memory (57, 58) which, in use, stores amplified or attenuated data to be read out therefrom at said leading edge and trailing edge.

3. A digital chroma-key apparatus according to claim 2, in which said memory is composed of a pair of random access memories (57, 58) which respectively store leading edge data and trailing edge data, said random access memories being operative in accordance with outputs of said detecting means (54).

4. A digital chroma-key apparatus according to claim 2 or 3, in which said detecting means comprises delay means (53) for delaying said digital keying signal by a predetermined period and a comparator (54) for comparing said digital keying signal and said delayed digital keying signal from said delay means (53), the output of said comparator (54), in use, indicating said leading edge and said trailing edge.

5. A digital chroma-key apparatus according to claim 1, in which said level control means comprises means (64, 65) for detecting rate of change in said digital keying signal, means (67) for generating coefficient in accordance with output of said detecting means and a multiplier (63) for multiplying said coefficient with said keying signal to produce an amplified or attenuated digital keying signal at said leading edge and trailing edge in response to commands of expansion or compression, respectively.

6. A digital chroma-key apparatus according to claim 5, in which said generating means (67) comprises read only memory which, in use, stores a set of coefficients corresponding to said rate of change, said rate of change being supplied to said read only memory as address data to read out said corresponding coefficient therefrom.

7. A digital chroma-key apparatus according to claim 1, and comprising means (24, 25) for forming first and second digital keying signal which respectively have delay amounts corresponding to an integral multiple of the sampling period, means for detecting leading and trailing edges of said digital keying signal and means (28) for selecting one of said first and second digital keying signal in response to output of said detecting means and commands of expansion or compression.

**Patentansprüche**

1. Digitale Vorrichtung zur Farbaufschlüsselung, mit einer Einrichtung (14) zur Erzeugung eines Tastungssignals entsprechend der speziellen Farbinformation eines ersten digitalen Videosignals (FG.VID), mit einer Einrichtung (18) zum Mischen dieses ersten digitalen Videosignals mit einem zweiten digitalen Videosignal (BG.VID), abhängig von dem Tastungssignal, gekennzeichnet

durch eine Detektionseinrichtung (53, 54) zur Detektion der Vorder- und der Rückflanke des digitalen Tastungssignals,

durch eine Einrichtung (38) zur Verschiebung dieses digitalen Tastungssignals um Inkremente eines Tastintervals der digitalen Videosignaldaten, um die Vorder- und/oder Rückflanken des digitalen Tastungssignals zu dehnen oder zu komprimieren, und

durch eine Pegelsteuerung (39; Figur 13) zur Verstärkung oder Dämpfung der Pegel der Vorder- und Rückflanken, abhängig vom jeweiligen der Befehle für Dehnung oder Kompression.

2. Vorrichtung nach Anspruch 1, gekennzeichnet dadurch, daß die Pegelsteuerung (39) einen Speicher (57, 58) hat, in dem im Betrieb verstärkte oder gedämpfte Daten zu speichern sind, die bei der Vorderflanke und der Rückflanke aus dem Speicher auszulesen sind.

3. Vorrichtung nach Anspruch 2, dadurch gekennzeichnet, daß der Speicher aus paarweisen RAM-Speichern (57, 58) besteht, die jeweilige Vorderflankendaten und Rückflankendaten speichern, wobei diese RAM-Speicher entsprechend den Ausgangssignalen der Detektionseinrichtung (54) wirksam werden.

4. Vorrichtung nach Anspruch 2 oder 3, gekennzeichnet, dadurch, daß die Detektionseinrichtung eine Verzögerungsschaltung (53) zur Verzögerung des digitalen Tastungssignals um eine vorgegebene Dauer und einen Vergleicher (54) zum Vergleichen dieses digitalen Tastungssignals mit dem verzögerten digitalen Tastungssignals der Verzögerungsschaltung (53) umfaßt, wobei das Ausgangssignal dieses Vergleichers (54) die Vorderflanke und die Rückflanke im Betrieb anzeigt.

5. Vorrichtung nach Anspruch 1, gekennzeichnet dadurch, daß die Pegelsteuerung Einrichtungen (64, 65) zur Detektion der Rate der Veränderung des digitalen Tastungssignals, eine Einrichtung (67) zur Erzeugung eines Koeffizienten, abhängig vom Ausgangssignal der Detektionseinrichtung, und einen Multiplizierer (63) hat, mit dem dieser Koeffizient mit dem Tastungssignal multipliziert wird, um ein verstärktes oder gedämpftes digitales Tastungssignal bei der Vorderflanke und der Rückflanke, abhängig vom jeweiligen Befehl für Dehnung oder Kompression, zu erzeugen.

6. Vorrichtung nach Anspruch 5, gekennzeichnet dadurch, daß die Einrichtung (67) zur Erzeugung des Koeffizienten einen ROM-Speicher hat, mit dem im Betrieb ein Satz Koeffizienten, abhängig von der Rate der Veränderung, zu speichern ist, wobei diese Rate der Veränderung dem ROM-Speicher als Adresse zugeführt wird, um den entsprechenden Koeffizienten aus dem Speicher auszulesen.

7. Vorrichtung nach Anspruch 1, gekennzeichnet dadurch, daß Einrichtungen (24, 25) vorgesehen sind, die der Bildung eines ersten und eines zweiten digitalen Tastungssignals dienen, die jeweils Verzögerungen besitzen, die einem ganzen Vielfachen der Abtastdauer entsprechen, daß eine Detektionseinrichtung zur Detektion der Vorder- und der Rückflanke des digitalen Tastungssignals vorgesehen ist und daß eine Einrichtung (28) zur Wahl des ersten oder des zweiten digitalen Tastungssignals, abhängig vom Ausgangssignal der Detektionseinrichtung und abhängig vom jeweiligen Befehl für Dehnung oder Kompression, vorgesehen ist.

**Revendications**

1. Dispositif numérique d'incrustation couleur comprenant un moyen (41) qui sert à produire un signal d'incrustation, ou de découpe, en réponse à une information de couleur spécifiée d'un premier signal vidéo numérique (FG.VID), et un moyen (18) servant à mélanger ledit premier signal vidéo numérique avec un deuxième signal vidéo numérique (BG.VID) en fonction dudit signal de découpe numérique, caractérisé par un moyen (53, 54) servant à détecter les flancs antérieur et postérieur dudit signal de découpe numérique, un moyen (38) servant à décaler ledit signal de découpe numérique par degrés d'un intervalle d'horloge de la donnée du signal vidéo numérique de manière à dilater ou contracter les flancs antérieur et, ou bien, postérieur dudit signal de découpe numérique, et un moyen (39) de commande de niveaux (figure 13) servant à amplifier ou atténuer les niveaux des flancs antérieur et postérieur en réponse à des instructions respectives de dilatation ou de compression.

2. Dispositif numérique d'incrustation couleur selon la revendication 1, où ledit moyen de commande (39) comprend un mémoire (57, 58) qui, en utilisation, emmagasine des données amplifiées ou atténuées destinées à être lues sur ledit flanc antérieur et ledit flanc postérieur.

3. Dispositif numérique d'incrustation couleur selon la revendication 2, où ladite mémoire est constituée de deux mémoires vives (57, 58) qui emmagasinent respectivement des données de flanc antérieur et des données de flanc postérieur lesdites mémoires vives travaillant en relation avec les signaux de sortie dudit moyen de détection (54).

4. Dispositif numérique d'incrustation couleur selon la revendication 2 ou 3, où ledit moyen de détection comprend un moyen retardateur (53) servant à retarder ledit signal de découpe numérique d'une durée prédéterminée et un comparateur (54) servant à comparer ledit signal de découple numérique et ledit signal de découpe numérique retardé par ledit moyen retardateur (53), le signal de sortie dudit comparateur (54) indiquant, en utilisation, ledit flanc antérieur et ledit flanc postérieur.

5. Dispositif numérique d'incrustation couleur selon la revendication 1, où ledit moyen de commande de niveaux comprend un moyen (64, 65) servant à détecter la vitesse de variation dudit signal de découpe numérique, un moyen (67) servant à produire un coefficient en fonction du signal de sortie dudit moyen de détection et un multiplicateur (63) servant à multiplier ledit coefficient avec ledit signal de découpe afin de produire un signal de découpe numérique amplifié ou atténué sur ledit flanc antérieur et ledit flanc postérieur en réponse à des instructions respectives de dilatation ou de compression.

6. Dispositif numérique d'incrustation couleur selon la revendication 5, où ledit moyen générateur (67) comprend une mémoire morte qui, et utilisation, emmagasine un groupe de coefficients correspondant à ladite vitesse de variation, ladite vitesse de variation étant délivrée à ladite mémoire morte comme donnée d'adresse afin de provoquer la lecture dudit coefficient correspondant.

7. Dispositif numérique d'incrustation couleur selon la revendication 1, et comprenant un moyen (24, 25) servant à former un premier et un deuxième signal de découpe numérique qui comporte respectivement des retards correspondant à un multiple entier de la période d'échantillonnage, un moyen servant à détecter les flancs antérieur et postérieur dudit signal de découpe numérique et un moyen (28) servant à sélectionner l'un desdits premier et deuxième signaux de découpe numériques en réponse au signal de sortie dudit moyen de détection et aux instructions de dilatation ou de compression.

F I G. 1 (PRIOR ART)

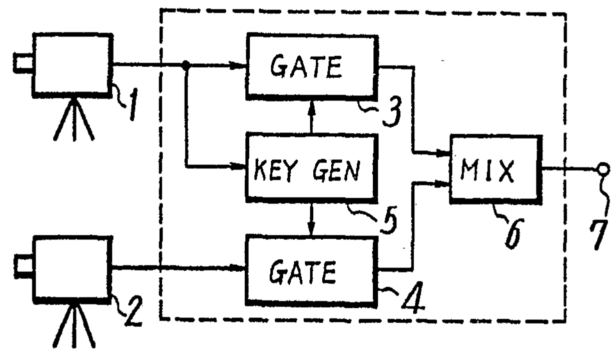


F I G. 2A

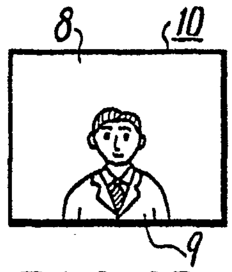


F I G. 2C

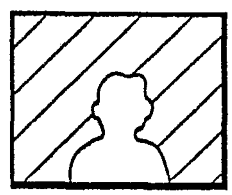

F I G. 2E

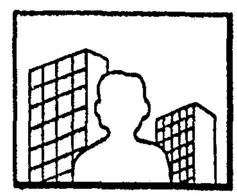

F I G. 2B

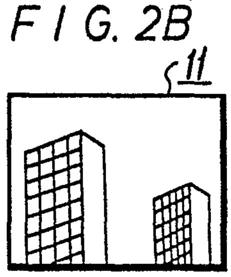


F I G. 2D

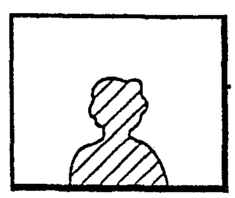

F I G. 2F

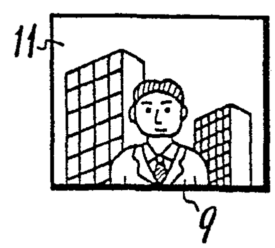

F I G. 3

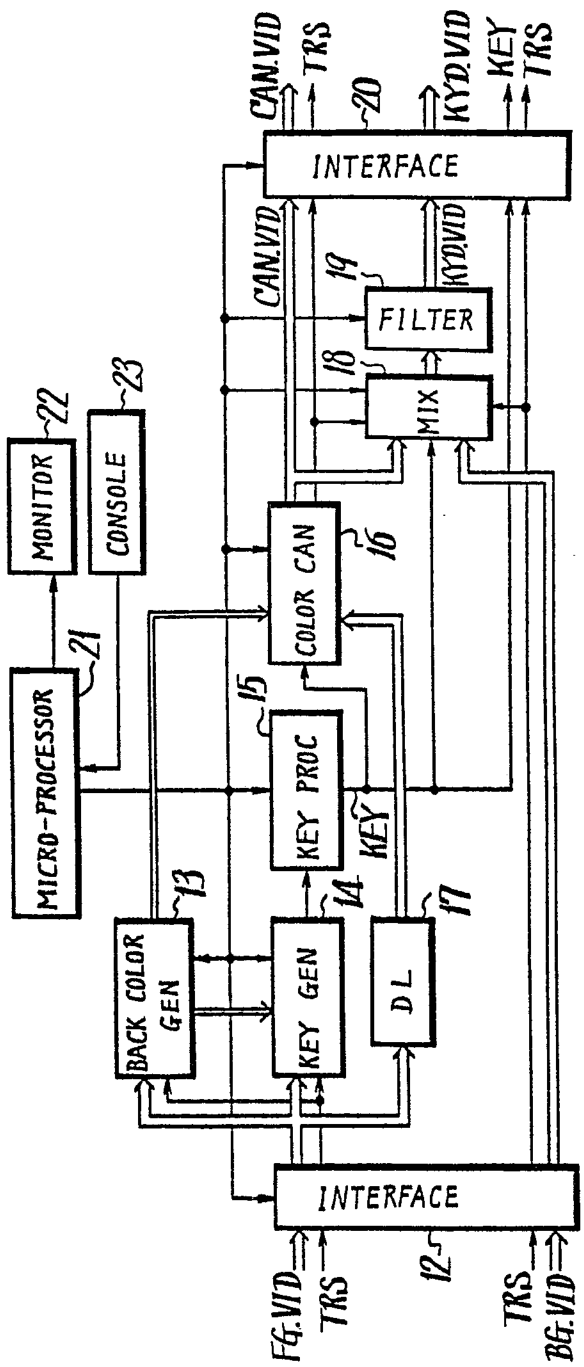
INTERFACE
12
FG.VID
TRS
TRS
BG.VID
BACK COLOR GEN
13
KEY GEN
14
DL
17
KEY PROC
15
KEY
COLOR CAN
16
MIX
18
FILTER
19
CAN.VID
KYD.VID
INTERFACE
20
CAN.VID
TRS
KYD.VID
KEY
TRS
MICRO-PROCESSOR
21
MONITOR
22
CONSOLE
23

F I G. 4

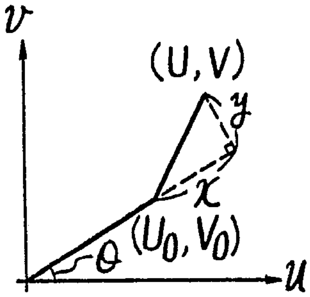


F I G. 7A

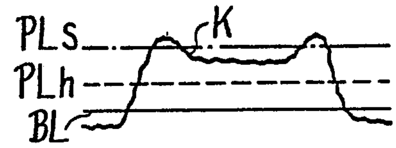


F I G. 7B

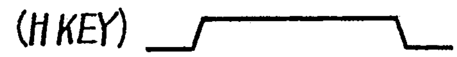


F I G. 7C

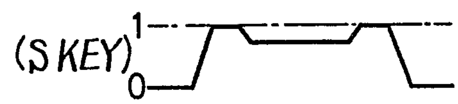


F I G. 7D

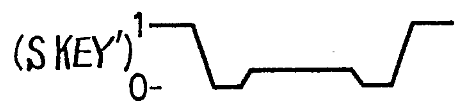


F I G. 8

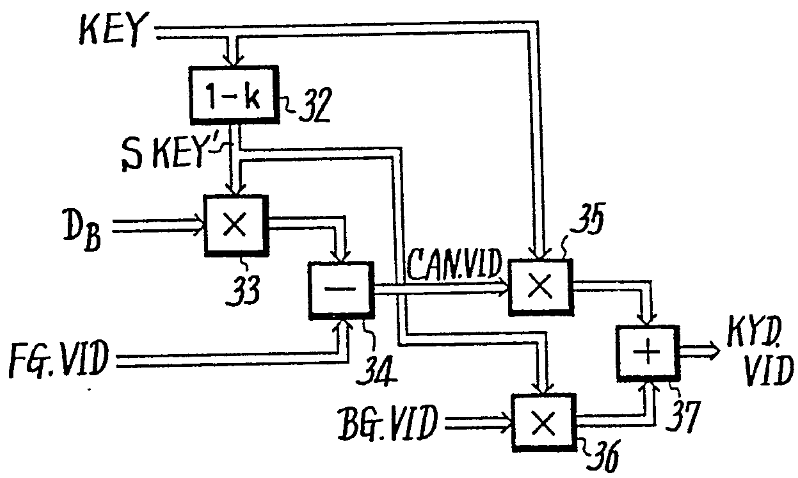

FIG. 5

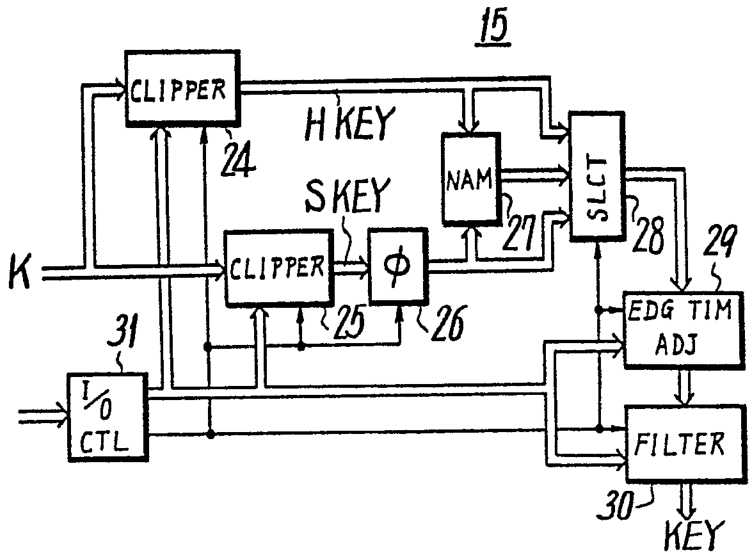


FIG. 6A

FIG. 6B

FIG. 6C

FIG. 6D

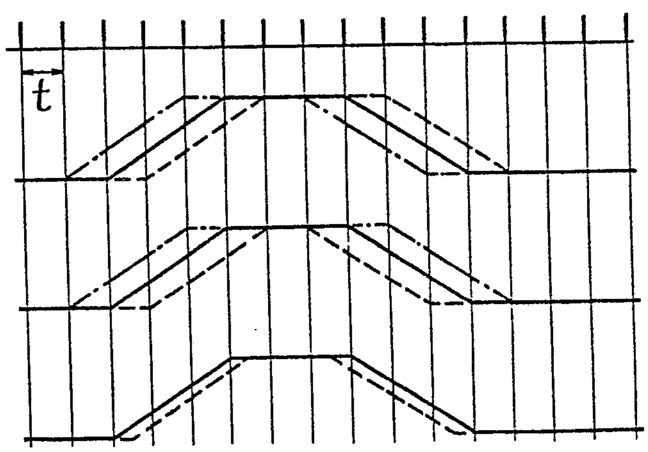

F I G. 9

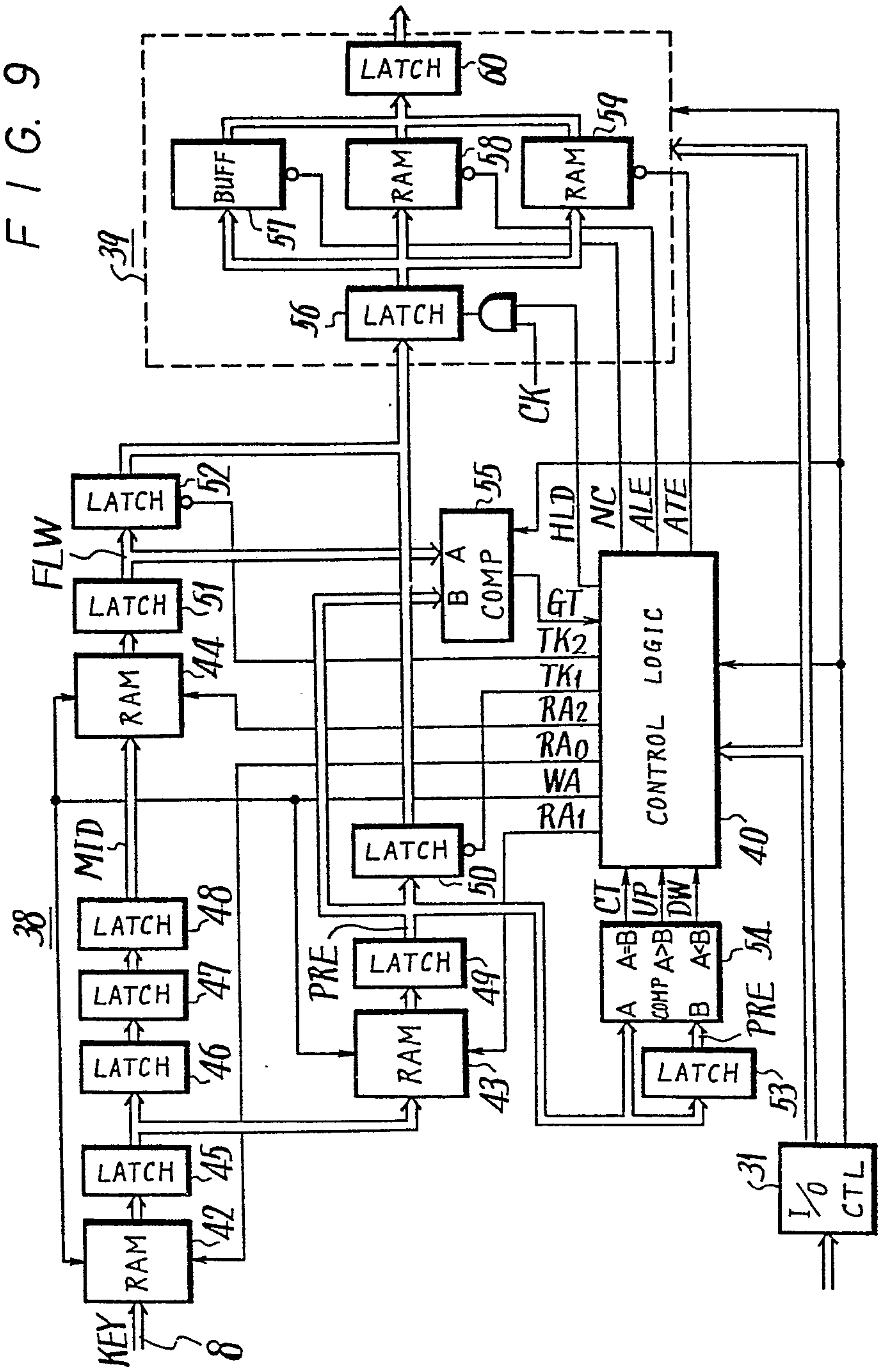

39
LATCH 60
BUFF 57
RAM 58
RAM 59
LATCH 56
CK
38
LATCH 52
FLW
LATCH 51
RAM 44
MID
LATCH 48
LATCH 47
LATCH 46
LATCH 45
RAM 42
KEY
8
B A COMP 55
HLD
NC
ALE
ATE
GT
TK2
TK1
RA2
RA0
WA
RA1
CONTROL LOGIC
40
LATCH 50
PRE
LATCH 49
RAM 43
CT
UP
DW
A A=B COMP A>B B A<B 54
PRE
LATCH 53
31
I/O CTL

FIG. 10A
FIG. 10B
FIG. 10C
FIG. 10D
FIG. 10E
FIG. 10F

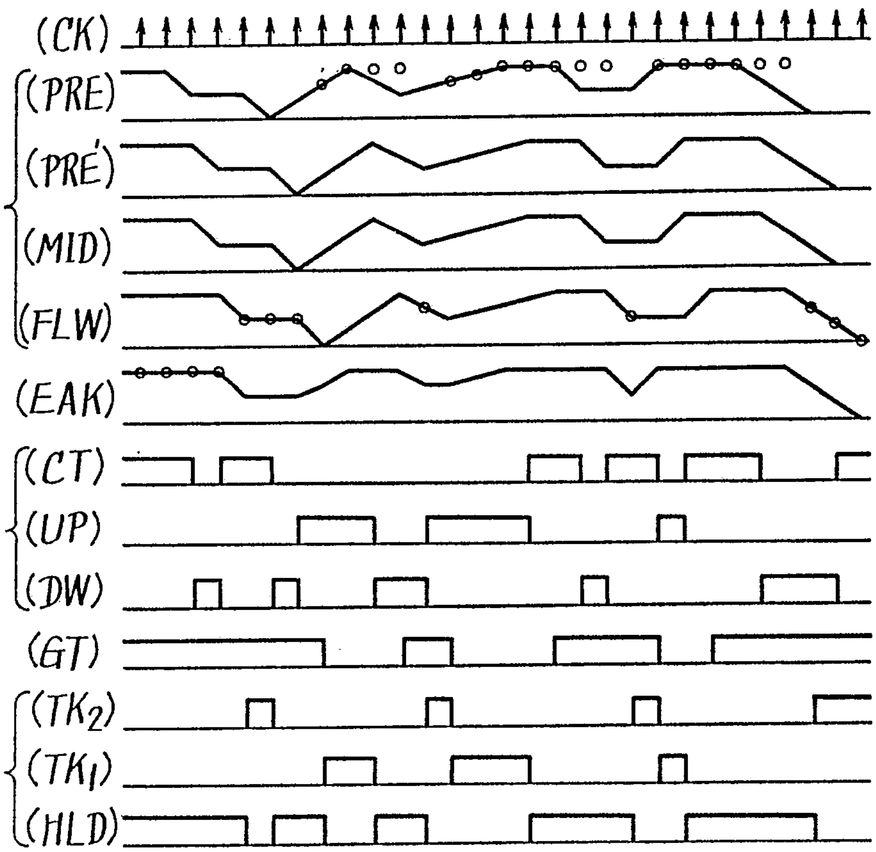

FIG. 11A

FIG. 11B

FIG. 11C

FIG. 11D

FIG. 11E

FIG. 11F

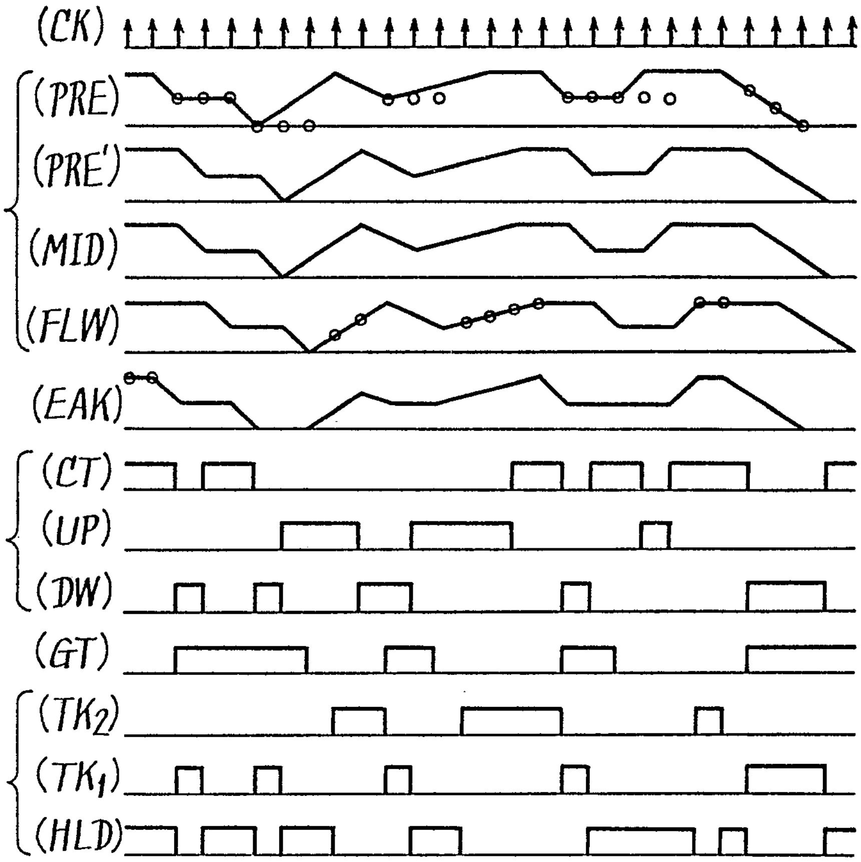

FIG. 12A
FIG. 12B
FIG. 12C
FIG. 12D
FIG. 12E
FIG. 12F
FIG. 12G

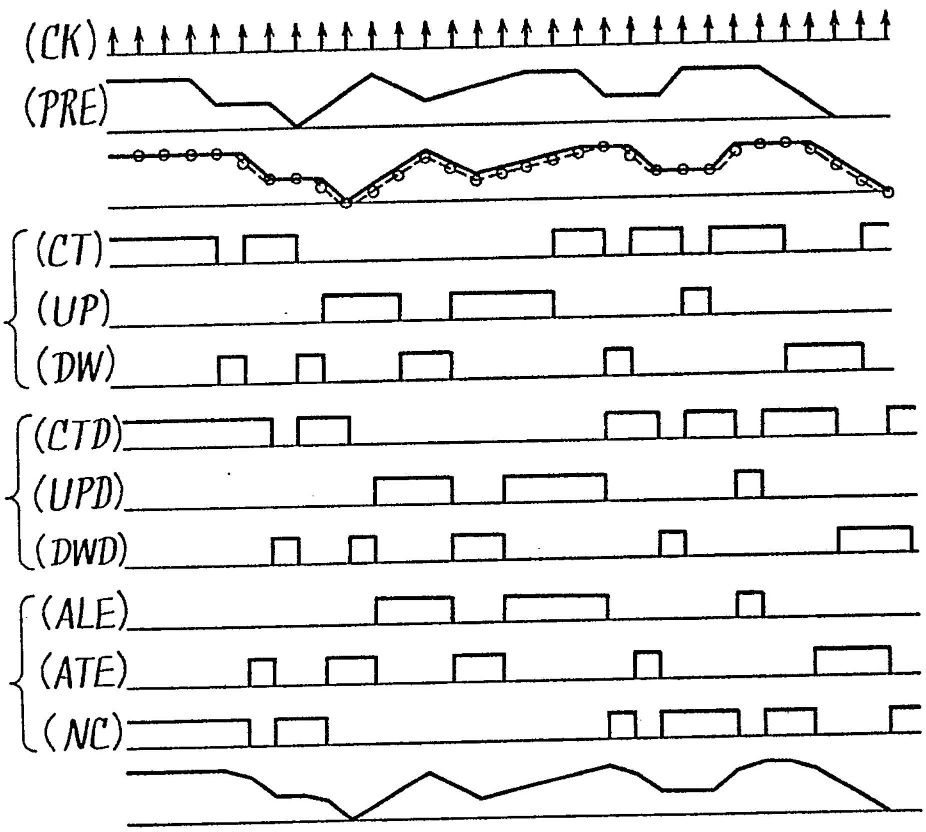

FIG. 13

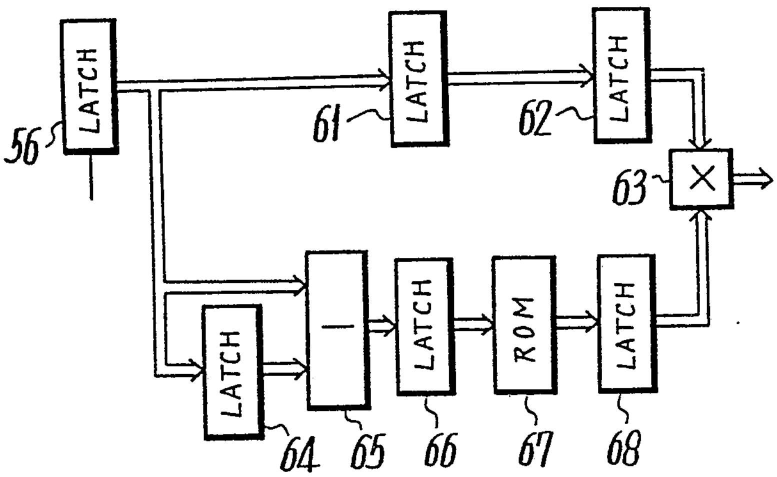


FIG. 14A

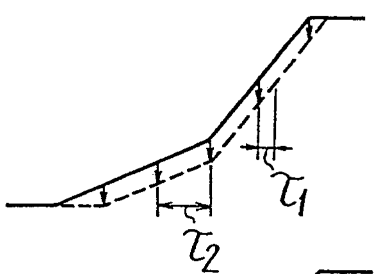


FIG. 14B